# EUROPEAN PATENT SPECIFICATION

(11) **EP 1 491 737 B1**
(45) Date of publication and mention of the grant of the patent: **18.10.2006**
(21) Application number: 03745440.2
(22) Date of filing: 28.03.2003
(51) Int. Cl.: F01N 3/20, F01N 11/00, B01D 53/94, F01N 3/08

(54) **METHOD OF DECIDING ON CATALYST DETERIORATION AND MEANS FOR DECIDING ON CATALYST DETERIORATION IN NOx PURGING SYSTEM**
VERFAHREN ZUR ERMITTLUNG EINER BEEINTRÄCHTIGUNG DES KATALYSATORS UND MITTEL ZUR ERMITTLUNG DER BEEINTRÄCHTIGUNG EINES KATALYSATORS IN EINEM NOx-SPÜLSYSTEM
PROCEDE DE DECISION SUR LA DETERIORATION D'UN CATALYSEUR ET MOYENS DE DECISION SUR LA DETERIORATION D'UN CATALYSEUR DANS UN SYSTEME D'EPURATION DE NOx

(30) Priority: 29.03.2002 JP 2002093884
(43) Date of publication of application: 29.12.2004
(73) Proprietor: Isuzu Motors Limited, Shinagawa-ku, Tokyo 140-0013 (JP)
(72) Inventor: ENOKI, Kazuhiro, c/o Isuzu Advanced Eng. Ctr Ltd, Fujisawa-shi, Kanagawa 252-8501 (JP)
(74) Representative: Weber, Dieter
(86) International application number: PCT/JP2003/003938
(87) International publication number: WO 2003/083274

(56) References cited:
- EP-A- 0 916 941
- WO-A-02/22255
- WO-A1-02/22255
- JP-A- 5 312 025
- JP-A- 62 153 546
- US-A- 5 979 160

## Description

### TECHNICAL FIELD

The present invention relates to a method of deciding on catalyst deterioration and means for deciding on catalyst deterioration in NOx purging system which is the system for reducing and purging NOx in the exhaust gas of an internal combustion engine or combustion equipment.

More minutely, the present invention relates to the method and means to be able to make an accurate decision on the state of deterioration of catalyst caused by sulfur poisoning in a NOx purging system using a direct reduction type NOx catalyst for purging NOx from exhaust gas.

### BACKGROUND ART

Various studies and proposals have been offered regarding a catalyst-type exhaust gas purging system for purging NOx (nitrogen oxides) from the exhaust gas of an internal combustion engine of a vehicle or a stationary internal combustion engine by reducing NOx. Particularly, a NOx reduction catalyst or a three-way-catalyst is in use to purify the exhaust gas of vehicles.

One of the studies and proposals shows an exhaust gas purifying system for internal combustion engine disclosed in the official gazette of the Japanese Patent Laid-Open No. 2000-274279 and the like. In this system, a NOx occlusion reduction catalyst is arranged in an exhaust gas passage of an engine. This system performs the absorbing operation of making the NOx occlusion reduction catalyst absorb NOx during the air/fuel ratio of an incoming exhaust gas is lean. When the absorbed quantity almost reaches to the level of NOx absorbing capacity, the regenerating operation is performed to make the air/fuel ratio of the exhaust gas close to a theoretical air/fuel ratio or rich and to lower an oxygen concentration of the incoming exhaust gas, and thereby releasing the absorbed NOx, and reducing the released NOx by a laid-in precious metal catalyst.

The NOx occlusion reduction catalyst supports a precious metal catalyst such as platinum (Pt) and alkaline earth such as barium (Ba) on a catalyst support. NO in the exhaust gas is oxidized by a catalyst activity of platinum and changed to NO₂ under a high-oxygen-concentration atmosphere. NO₂ is diffused in the catalyst in the form of NO₃⁻, and absorbed in the form of nitrate.

Moreover, when the air/fuel ratio becomes rich and the oxygen concentration lowers, NO₃⁻ is released in the form of NO₂. And the NO₂ is reduced to N₂ in accordance with the catalyst activity of platinum by reducer such as unburned HC, CO, and H₂ contained in the exhaust gas. It is possible to prevent NOx from being released to the atmospheric air in accordance with the above reducing effect.

However, in the case of the exhaust gas purging system using the NOx occlusion reduction catalyst, an extremely large quantity of NOx is released in a short time when the NOx occlusion reduction catalyst is regenerated. Therefore, it is necessary to reduce the NOx by a precious metal catalyst. However, even if supplying a proper quantity of reducers, it is difficult to reduce the total quantity of NOx to N₂ by securely bringing the total quantity of NOx into contact with the reducers and the precious metal catalyst. Then, some of NOx leaks. Therefore, there is a problem that a - decrease of NOx is limited.

Moreover, because a catalyst function is deteriorated by the sulfur contained in the fuel of a diesel engine, there is a problem of sulfur poisoning that it is difficult to keep the rate of NOx purge high for a long time. Therefore, the exhaust gas purifying system in the official gazette of the Japanese Paten Laid-Open No. 2000-274279 performs the deterioration judgment that a NOx occlusion reduction catalyst is deteriorated when the NOx concentration at the end of release of NOx is equal to or higher than a predetermined reference value for the deterioration, in accordance with the characteristic of an occlusion catalyst to store a large quantity of NOx by absorbing substance and to release the NOx from the substance.

For the sulfur purge for reactivating the catalyst from the deteriorated state due to the sulfur poisoning, it is necessary to raise the catalyst temperature up to 650°C. In the case of a diesel engine, it is necessary to raise the exhaust gas temperature to 600°C or higher in order to raise the catalyst temperature to 650°C or higher. However, even if performing the exhaust gas temperature raising control such as intake throttling or rich burning, it is actually difficult to raise the catalyst temperature up to 650°C by only controlling the engine.

However, separately from the NOx occlusion reduction catalyst, a catalyst for directly reducing NOx (hereafter referred to as direct reduction type NOx catalyst) is disclosed in the patent applications to Republic of Finland No. 19992481 and 20000617.

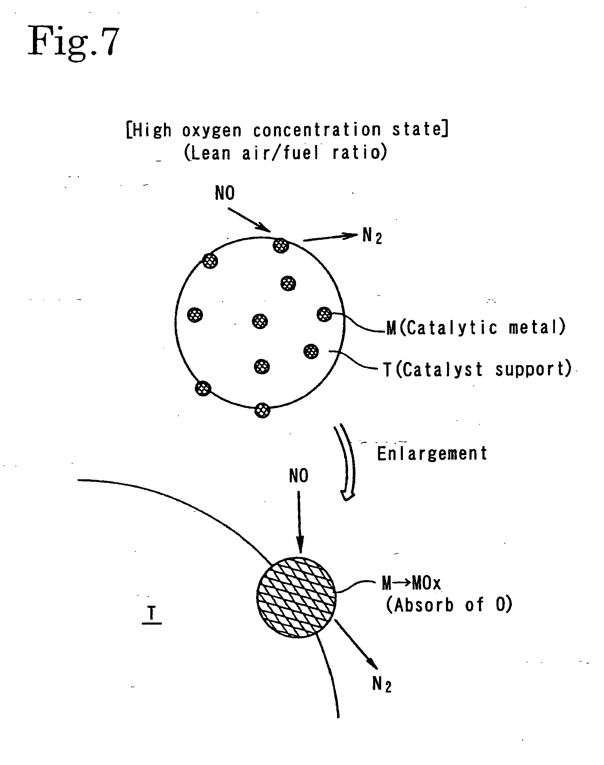

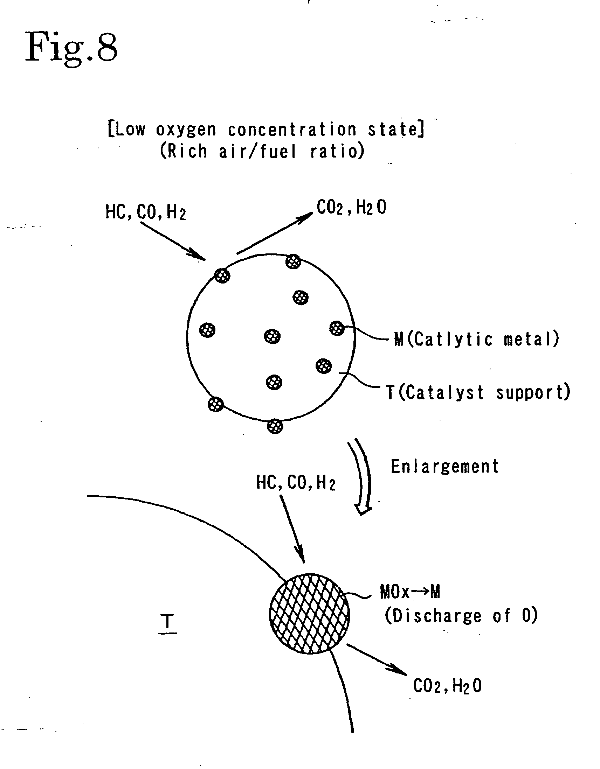

The direct reduction type NOx catalyst is obtained by making a catalyst support T such as β-type zeolite support a metal M such as rhodium (Rh) or palladium (Pd) which is a catalyst component as shown in FIGs. 7 and 8. As shown in Fig 7, in the case of high oxygen concentration atmosphere such as the lean state exhaust gas of an internal combustion engine such as a diesel engine in which the air/fuel ratio of exhaust gas is lean, the catalyst component contacts with NOx and reduces the NOx to N₂. At the same time, it is oxidized to become metal oxide MOx such as rhodium oxide. After all of the metal M is oxidized, the capability of NOx reduction disappears. Therefore, it is necessary to regenerate the metal M when it is oxidized to a certain extent.

As shown in FIG 8, the above regeneration is performed by setting the oxygen concentration of the exhaust gas to almost equal to 0% as the air/fuel ratio is in a theoretical air/fuel ratio or a rich state, by bringing the metal oxide MOx such as rhodium oxide into contact with reducer such as unburned HC, CO, and H₂ in a reduction atmosphere to reduce the metal oxide MOx, and by returning the metal oxide M to its original metal M.

In the case of the direct reduction type NOx catalyst, the reaction for reducing the metal oxide MOx is quickly performed even at a low temperature (e.g. 200°C or higher) compared to the case of other catalyst. And moreover, there is an advantage that the problem of sulfur poisoning is small.

Moreover, cerium (Ce) is blended. This cerium contributes for decreasing the oxidation of the metal M and for holding the capability of reduction of NOx. And a three-way-catalyst is set to a lower layer to accelerate the reaction of reduction and oxidation, particularly the reaction of reducing NOx in a rich state. Moreover, iron (Fe) is added to the catalyst support in order to improve the rate of NOx purge.

However, though sulfur poisoning is small compared to the case of the NOx occlusion reduction catalyst, sulfur poisoning is slowly progressed by the sulfur in a fuel. Then the deterioration of the catalyst is progressed. That is, because the sulfur contained in the exhaust gas is absorbed as SO₂ in the iron added to the catalyst support, primary sulfur poisoning occurs in which the improvement of the purge performance of NOx due to the iron is inhibited. Moreover, in an oxidizing atmosphere containing no reducer at a constant temperature, SO₂ discharged from iron is changed to SO₃ and the SO₃ is combined with cerium. Therefore, the contribution of the cerium to holding the capability of the NOx reduction is lowered and the rate of NOx is decreased.

When the deterioration progresses in the direct reduction type NOx catalyst, the rate of NOx purge is decreased because the capability of reducing NOx to N₂ is decreased even in the case of an atmosphere in which the air/fuel ratio of the exhaust gas is in the lean state and the oxygen concentration is high. And moreover, the NOx reduction capability is immediately decreased to a value close to a limit. Then, because it is necessary to frequently perform regeneration by rich burning, fuel efficiency decreases.

Therefore, in the case of the direct reduction type NOx catalyst, it is necessary to perform not only the regeneration of reducing the metal oxide MOx to the metal M by bringing into contact with reducers in a reducing atmosphere, but also the reactivation of removing sulfur from catalyst by monitoring a progress state of deterioration due to the sulfur poisoning and by setting an exhaust gas temperature to approx. 400°C in a low oxygen concentration state when the deterioration is progressed to a certain extent.

Moreover, in the case of the direct reduction type NOx catalyst, as a characteristic of the NOx catalyst, it is found through an experiment that the following phenomenon occurs at a low SV (Space Velocity) of 50,000/h or less. Only in a state in which the NOx catalyst is deteriorated due to sulfur poisoning, a large quantity of NOx is discharged when a catalyst temperature is kept in a range of 250°C to 350°C and the air/fuel ratio is lowered to approx. 23 during a steady operation.

WO 02/22255 discloses a method for the catalytic decomposition of nitrogen oxides using periodic rich/lean excursions with a high durability even in the presence of oxygen, sulfur oxides and water and at high reaction temperatures.

EP 0 916 941 discloses an apparatus for detecting the functional condition of NOx occlusion catalyst. Such document is not related to an exhaust gas purifying system actually mounted on a vehicle.

### SUMMARY OF THE INVENTION

The present invention is made to solve the above problems by obtaining the above knowledge and its object is to provide a method means of deciding on catalyst deterioration and method for deciding on catalyst deterioration in an exhaust gas decontamination system, which enables making an accurate decision on the state of deterioration of catalyst caused by sulfur poisoning in a NOx purging system using a direct reduction type NOx catalyst to purge NOx from exhaust gas.

The method for achieving the above object is the method of deciding on catalyst deterioration in the NOx purging system comprised of a direct reduction type NOx catalyst arranged in an exhaust gas passage in which a catalyst component reduces NOx to nitrogen and is also oxidized when an oxygen concentration in the exhaust gas of an engine is high and the catalyst component is reduced when the oxygen concentration in the exhaust gas is low, which comprises generating the exhaust gas for decision when an operating state of an engine is within a deterioration decision zone and is in a steady operation state, and deciding that the direct reduction type NOx catalyst is deteriorated when the NOx concentration in the exhaust gas resulting from pass of the exhaust gas for decision through the direct reduction type NOx catalyst is not less than a give reference value.

It is possible to constitute the direct reduction type NOx catalyst by making a catalyst support such as β-type zeolite support a special metal such as rhodium (Rh) or palladium (Pd) which is a catalyst component. Moreover, it is possible to form the direct reduction type NOx catalyst by blending cerium (Ce) in order to decrease the oxidation action of a metal of the catalyst component and to contribute to holding the capability of reduction of NOx. And it is possible to set a three-way-catalyst having platinum (Pt) or the like to a lower layer in order to accelerate a redox reaction, particularly the reduction reaction of NOx discharged in a rich state, or to add iron (Fe) to the support in order to improve the rate of NOx purge.

A catalyst in which a catalyst component reduces NOx to N₂ and the catalyst component is oxidized when the oxygen concentration in the exhaust gas is high, and the catalyst component is reduced when the oxygen concentration of the exhaust gas is decreased, is referred to as "direct reduction type NOx catalyst" in this case in order to distinguish this catalyst from catalysts used in other prior arts.

Moreover, a prescribed reference value for a NOx concentration is a numerical value or map data obtained through an experiment, which is a preset value.

Furthermore, in the case of the method of deciding on catalyst deterioration in a NOx purging system, it is decided that the operating state of the engine is within a deterioration decision zone, when the quantity of the exhaust gas is not more than a prescribed reference quantity of exhaust gas and a catalyst temperature ranges between a prescribed lower limit temperature for decision and a prescribed upper limit temperature for decision.

The prescribed reference quantity of exhaust gas is an upper limit quantity of the exhaust gas when a space velocity (SV) for a direct reduction type NOx catalyst is not more than 50,000/h and values of 250°C and 350°C are experimentally obtained as a prescribed lower limit temperature for decision and a prescribed upper limit temperature for decision.

Moreover, the decision that an operation state is in a steady operation sate, can be performed by judging that the present state is the steady operating state when the absolute value of a change value ΔQ of a torque Q is not more than a prescribed reference value ΔQlim and the absolute value of a change value ΔNe of an engine speed Ne is not more than a prescribed reference value ΔNelim.

Furthermore, in the case of the method of deciding on catalyst deterioration in a NOx purging system, the exhaust gas for decision is generated so that the air/fuel ratio of exhaust gas becomes a value between the air/fuel ratio of the exhaust gas during the normal engine operation and the air/fuel ratio of the exhaust gas for regenerating the direct reduction type NOx catalyst.

The air/fuel ratio of the exhaust gas for decision is approx. 23, preferably 22 to 25, when the base of the air/fuel ratio is approx. 27 and the air/fuel ratio of regeneration exhaust gas is 14.7 or less. The exhaust gas for decision can be produced by any one of a fuel injection control, an intake air quantity control, and an EGR control or a combination of them.

The above normal engine operation is not a control operation for regenerating a catalyst or reactivating a deteriorated catalyst but an operation for operating an engine at a torque and a engine speed requested to the engine. In the case of the normal engine operation, the air/fuel ratio of the exhaust gas is approx. 27 in a deterioration decision zone and NOx contained in the exhaust gas is directly reduced to N₂ and purged by a direct reduction type NOx catalyst.

Moreover, the means for deciding on catalyst deterioration in a NOx purging system for executing the above method of deciding on catalyst deterioration is the means of deciding on catalyst deterioration in a NOx purging system composed of a direct reduction type NOx catalyst arranged in an exhaust gas passage in which a catalyst component reduces NOx to nitrogen and is also oxidized when an oxygen concentration in the exhaust gas of an engine is high and the catalyst component is reduced when the oxygen concentration in the exhaust gas is low, which comprises a zone judgment means for judging whether an exhaust gas state is in a zone capable of performing a decision for the catalyst deterioration, a steady operation judgment means for judging whether an engine operating state is in a steady operation state, a decision exhaust gas generation means for generating an exhaust gas for decision, and a NOx concentration judgment means for deciding that the direct reduction type NOx catalyst is deteriorated when the NOx concentration in the exhaust gas resulting from pass of the exhaust gas for decision through the direct reduction type NOx catalyst is higher than a prescribed reference value.

Moreover, in the case of the above means for deciding on catalyst deterioration in a NOx purging system, the zone judgment means decides that the operating state of the engine is within a deterioration decision zone, when the quantity of the exhaust gas is not more than a prescribed reference quantity of the exhaust gas and a catalyst temperature ranges between a prescribed lower limit temperature for decision and a prescribed upper limit temperature for decision.

Furthermore, in the case of the above means for deciding on catalyst deterioration in a NOx purging system, the decision exhaust gas generation means generates the exhaust gas for decision in which an air/fuel ratio of the exhaust gas becomes a value between the air/fuel ration of the exhaust gas during the normal engine operation and the air/fuel ratio of the exhaust gas for regenerating the direct reduction type NOx catalyst.

According to the method of deciding on catalyst deterioration and means for deciding on catalyst deterioration in a NOx purging system having the above configuration, because a deteriorated state of a catalyst due to sulfur poisoning can be accurately decided in a NOx purging system using the direct reduction type NOx catalyst to purge NOx in the exhaust gas, it is possible to perform the operation to reactivate the deteriorated catalyst against the catalyst deterioration in a proper time.

Therefore, it is possible to reduce the influence of the catalyst deterioration relating to the time for NOx reduction and regeneration or the like in the direct reduction type NOx catalyst and to purge efficiently the NOx at a high purging performance. Thus, it is possible to further reduce the exhaust quantity of NOx and further improve a NOx purging performance.

### BRIEF DESCRIPTION OF THE DRAWINGS

FIG. 1 is an illustration showing a configuration of a NOx purging system of an embodiment of the present invention;
FIG. 2 is an illustration showing a configuration of a NOx purging system control means of an embodiment of the present invention;
FIG. 3 is a flowchart showing an example a NOx purging system control flow of an embodiment of the present invention;
FIG. 4 is a flowchart showing an example of the catalyst regenerating control flow in FIG. 3;
FIG. 5 is a flowchart showing an example of the deteriorated catalyst reactivation control flow in FIG. 3;
FIG. 6 is a flowchart showing an example of the determination judgment flow of an embodiment of the present invention;
FIG. 7 is a schematic view showing a reaction of a direct reduction type NOx catalyst at a high oxygen concentration; and
FIG. 8 is a schematic view showing a reaction of a direct reduction type NOx catalyst in a low oxygen concentration state.

### DETAILED DESCRIPTION OF THE PREFERRED EMBODIMENT

The embodiments of the method of deciding on catalyst deterioration and means for deciding on catalyst deterioration in a NOx purging system according to the present invention are described below by referring to the accompanying drawings.

First, the NOx purging system in which the method of deciding on catalyst deterioration and means for deciding on catalyst deterioration are used is described below.

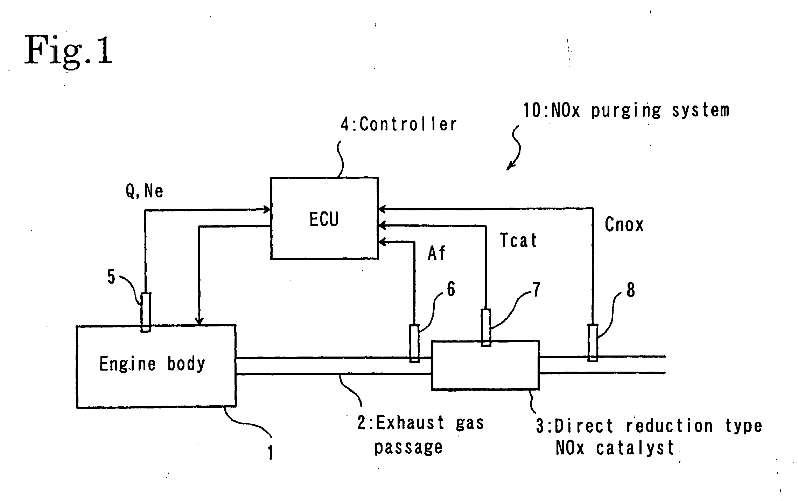

As shown in FIG. 1, the NOx purging system 10 is comprised of a direct reduction type NOx catalyst 3 arranged in an exhaust gas passage (exhaust passage) 2 of an engine body 1.

As shown in FIGs. 7 and 8, the direct reduction type NOx catalyst 3 is composed by making a catalyst support T such as β-type zeolite support a special metal M such as rhodium (Rh) or palladium (Pd). Moreover, cerium (Ce) is bended for reducing an oxidization of the metal M and contributing to holding of a NOx reduction capability, a three-way-catalyst having platinum (Pt) or the like is arranged to a lower layer so as to accelerate a redox reaction, and iron (Fe) is added to the support in order to improve a rate of NOx purge.

Then, as shown in FIG. 7, the direct reduction type NOx catalyst 3 reduces NOx to N₂ contacting with NOx and the metal M itself is oxidized to become metal oxide MOx such as rhodium oxide (RhOx), in an atmosphere of a high oxygen concentration like an exhaust gas of an internal combustion engine such as a diesel engine in which the air/fuel ratio is lean. As shown in FIG. 8, however, the metal oxide MOx has a characteristics to be reduced to become its original metal M such as rhodium (Rh) by contacting with reducers such as unburned HC, CO, and H₂, in the case of a reduction atmosphere in which an oxygen concentration of the exhaust gas is almost equal to 0% like a case as the air/fuel ratio is equal to a theoretical air/fuel ratio or in a rich state.

Moreover, an operating state detector 5 is set which is comprised of a torque sensor and an engine speed sensor for detecting the operating state of an engine, mainly a torque Q and an engine speed Ne. Furthermore, an air/fuel ratio sensor 6 for detecting an air/fuel ratio Af is set upstream of the direct reduction type NOx catalyst 3 arranged in the exhaust gas passage 2. And a catalyst temperature sensor 7 for detecting a catalyst temperature Tcat is set in the direct reduction type NOx catalyst 3, and moreover a NOx sensor 8 for detecting a NOx concentration Cnox is set downstream of the NOx catalyst 3.

Then, a controller 4 referred to as an engine control unit (ECU) for performing the general control of an engine such as fuel injection control by using the torque (load) Q and engine speed Ne of the engine 1 obtained from the operating state detector 5 or the like as inputs is provided. And a NOx purging system control means for performing the catalyst regeneration control and the deteriorated catalyst reactivation control for the direct reduction type NOx catalyst 3 is set in the controller 4.

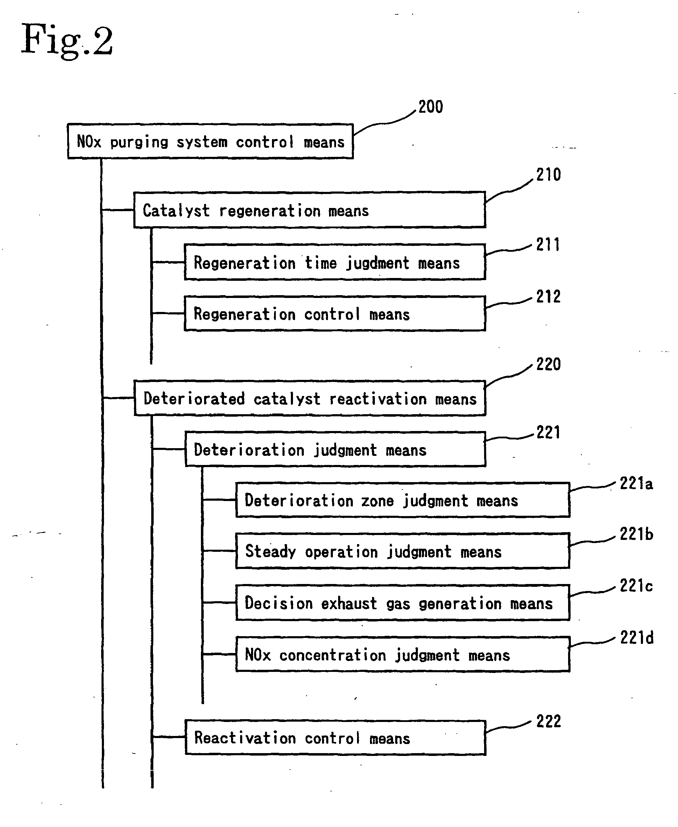

As shown in FIG. 2, a NOx purging system control means 200 is composed of a catalyst regeneration means 210 and a deteriorated catalyst reactivation means 220. The catalyst regeneration means 210 is composed of a regeneration time judgment means 211 and a regeneration control means 212, and the deteriorated catalyst reactivation means 220 is composed of a deterioration judgment means 221 and a reactivation control means 222.

The catalyst regeneration means 210 is a means for regenerating the direct reduction type NOx catalyst 3 in which the metal M has changed the metal oxide MOx by contacting with NOx to redue NOx to N₂ in the normal operating state of high oxygen concentration where the air/fuel ratio of the exhaust gas is in a lean state.

The regeneration time judgment means 211 judges the time for performing the regeneration. When it judges that it is the time, the regeneration control means 212 generates the exhaust gas of theoretical air/fuel ratio or a rich state in which the oxygen concentration is almost equal to 0%, and makes the metal oxide MOx contact with reducers such as unburned HC, CO, and H₂ to reduce the metal oxide MOx and to return it to the metal M.

The regeneration time judgment means 211 judges whether it is the regeneration time or not by the NOx concentration Cnox of the exhaust gas downstream of the direct reduction type NOx catalyst 3 when reducing NOx, by the elapsed time during which the oxygen concentration is high, and by the estimated value of the quantity of NOx reduced by the direct reduction type NOx catalyst 3 when reducing NOx.

Moreover, the regeneration control means 212 is a means for decreasing the oxygen concentration of the exhaust gas, that is, a means for performing the rich spike operation with the air/fuel ratio Af of 14.7 or less. This means 212 performs any one or a combination of the controls such as a fuel injection control for controlling the injection of the fuel to be supplied to the combustion chamber of an internal combustion engine, an intake air control for controlling the quantity of intake air, and an EGR control for controlling the quantity of EGR gas in an EGR system, and performs a feedback control so that the detection value Af is kept within a prescribed set range in accordance with the detection value Af of the air/fuel ratio sensor 6.

The fuel injection control includes a main injection time control for changing time of the main fuel injection into the combustion chamber of an engine and a post-injection control for performing a post-injection after a main injection. And the intake air control includes an intake throttle valve control for controlling a valve opening of a not-illustrated intake throttle valve and a turbocharger intake air control for controlling the quantity of an intake air from a compressor of a not-illustrated turbocharger.

Moreover, the deterioration judgment means 221 of the deteriorated catalyst reactivation means 220 relates to the present invention, which is a means for judging the deteriorated state of the direct reduction type NOx catalyst 3 as the decision whether on a reactivation time or not. And this means 221 is composed of a deterioration zone judgment means 221a, a steady operation judgment means 221b, a decision exhaust gas generation means 221c, and a NOx concentration judgment means 221d.

The deterioration zone judgment means 221a is a means for judging whether the exhaust gas state is in the zone in which it is capable of performing the decision on catalyst deterioration. This means 221a judges that the exhaust gas state is in the deterioration decision zone when the quantity Qe of the exhaust gas is not more than a prescribed reference quantity Qelim of exhaust gas and a catalyst temperature Tcat ranges between a prescribed lower limit temperature TL for decision and a prescribed upper limit temperature TH for decision.

The prescribed reference quantity Qelim of exhaust gas is previously set as a value at which the value of a space velocity (SV) to the direct reduction type NOx catalyst 3 becomes a low SV state of 50,000/h or less. Moreover, from experimental results, 250°C is obtained as the prescribed lower limit temperature TL for decision and 350°C is obtained as the prescribed upper limit temperature TH for decision.

Moreover, the value of the SV is a value obtained by dividing an exhaust gas flow rate by the volume of a catalyst system and serving as a passing velocity.

The steady operation judgment means 221b is a means for judging whether an engine operating state is of stationary state of an engine. This means 221b judges that the present operation is the steady operation when the absolute value of a change value ΔQ of the torque Q is not more than the prescribed reference value ΔQlim and the absolute value of a change value ΔNe of the engine speed Ne is not more than the prescribed reference value ΔNelim.

The decision exhaust gas generation means 221c is a means for generating an exhaust gas for decision in which the air/fuel ratio Af is approx. 23. This means 211c performs feedback control in accordance with the value of the air/fuel ratio Af detected by the air/fuel ratio detector 6 to generate the exhaust gas having a prescribed air/fuel ratio. The exhaust gas is generated in accordance with any one of a fuel injection control, an intake air control, and an EGR control or a combination of them.

Moreover, the NOx concentration judgment means 221d judges that the direct reduction type NOx catalyst 3 is deteriorated when the NOx concentration Cnox where a state of exhaust gas is in state of the exhaust gas for decision is larger than a prescribed reference value Cnoxlim and returns by setting a deterioration judgment flag F2 to 1. However, when the NOx concentration Cnox is smaller than the prescribed reference value Cnoxlim, the means 221d judges that the catalyst 3 is not deteriorated and returns by setting the deterioration judgment flag F2 to 0.

Furthermore, the reactivation control means 222 of the deteriorated catalyst reactivation means 220 is a means for reactivating the direct reduction type NOx catalyst 3 deteriorated due to sulfur poisoning. This reactivation is carried by sulfur-purge. This means 222 performs the control for raising the catalyst temperature Tcat to 400°C or higher while bringing an oxygen concentration of the exhaust gas to a value close to 0%.

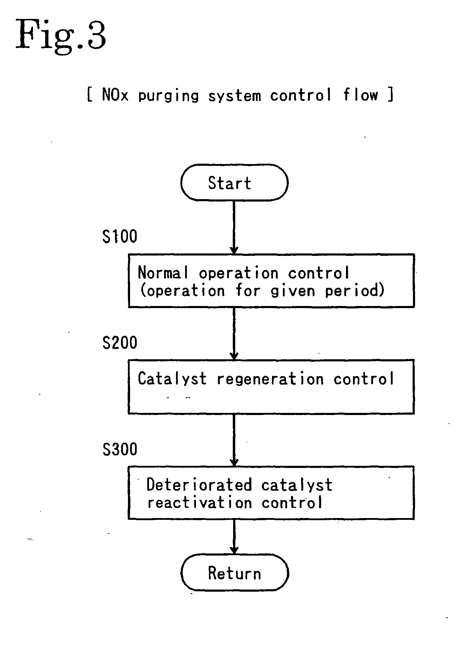

Then, a NOx purging system control flow is described below in which NOx is purged from the exhaust gas by controlling the NOx purging system 10 of above configuration by the NOx purging system control means 200. The control flow is performed in accordance with the flowcharts and the like illustrated in FIGs. 3 to 6.

The NOx purging system control flows illustrated in FIGs. 3 to 6 are designed as a part of the general flow for generally controlling an engine, which is called from a main engine control flow and executed in parallel with an engine control flow. After this control flow is executed, the general flow repeatedly returns to the main engine control flow and is completed in accordance with the completion of the engine control flow.

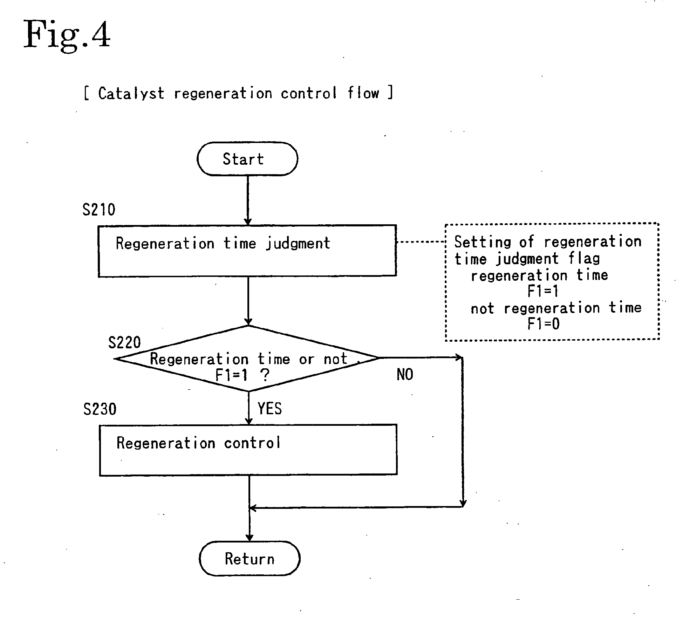

In the case of the NOx purging system control flow in FIG. 3, the normal operation control for purging NOx by the direct reduction type NOx catalyst 3 is performed for a prescribed period (for example, the time period for judging whether to perform the catalyst regeneration control or the deteriorated catalyst reactivation control) in step S100. And, in step S200, as shown by the catalyst regeneration control flow in FIG. 4, it is judged whether the direct reduction type NOx catalyst 3 is in a regeneration time in step S210. Through this checking in step S220, the regeneration control in step S230 is executed when the present time is the regeneration time (F1=1). But, when the present time is not the regeneration time (F1=0), the flow returns directly and goes to the deteriorated catalyst reactivation control in the next step S300 in FIG. 3.

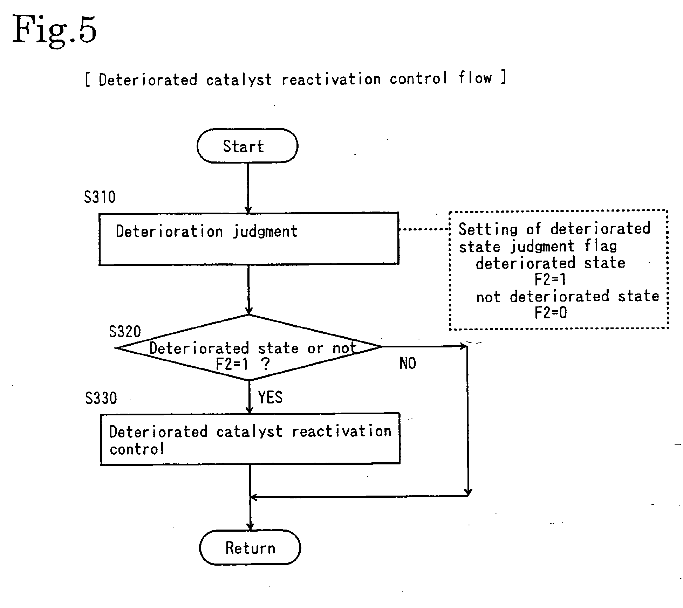

In the case of the deteriorated catalyst reactivation control, as shown in the deteriorated catalyst reactivation control flow in FIG. 5, it is judged whether the direct reduction type NOx catalyst 3 is deteriorated in step S310. Through this checking in step S320, when it is judged that the catalyst 3 is deteriorated (F2=1), the deteriorated catalyst reactivation control is executed in step S330. However, when it is judged that the catalyst 3 is not deteriorated (F2=0), the flow returns directly to the NOx purging system control flow in FIG. 3.

Then, the flow goes to the return at the NOx purging system control flow in FIG. 3 to return to a not-illustrated main engine control flow and the NOx purging system control flow is repeated by being called again from the engine control flow.

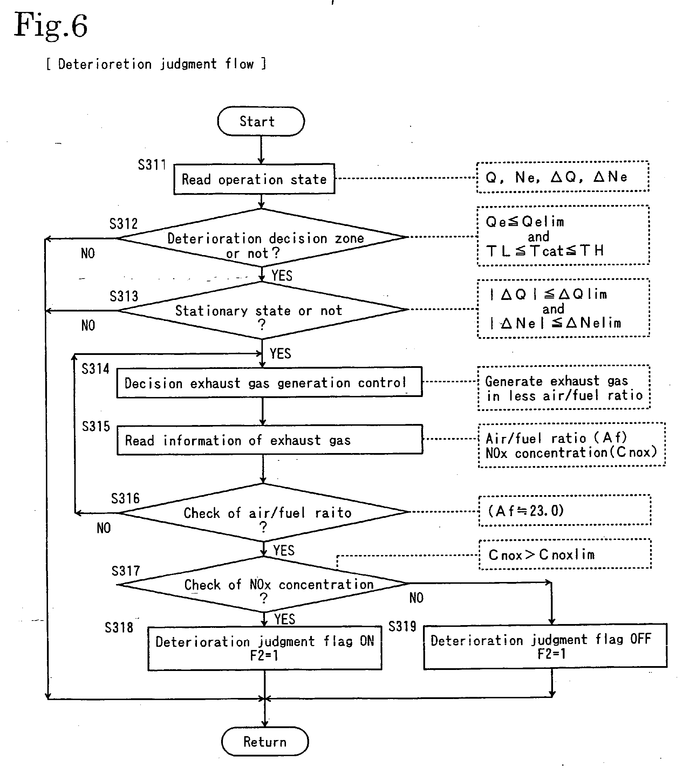

Moreover, in the case of the exhaust gas purging system 10 of the present invention, the deterioration judgment for the direct reduction type NOx catalyst 3 (step S310) is performed by the method of deciding on catalyst deterioration based on the deterioration judgment flow illustrated in FIG. 6.

When the deterioration judgment flow in FIG. 6 starts, the detection and control values showing operation state such as the torque Q and engine speed Ne are first read from the operating state detector 5 in step S311. Then, in step S312, it is judged whether the quantity Qe of the exhaust gas is not more than the prescribed reference quantity Qelim of exhaust gas at which the present state becomes a low SV state in which the value of the space velocity (SV) to the direct reduction type NOx catalyst 3 is 50,000/h or less and the catalyst temperature Tcat ranges between the prescribed lower limit temperature TL (250°C) for decision and the prescribed lower limit temperature TH (350°C) for decision.

When it is judged in step S312 that an operating state is not in the deterioration decision zone, the flow returns. However, when it is judged that the operating state is in the deterioration decision zone, it is judged in step S313 whether the operating state is in a steady operation state in accordance with whether the absolute value of the change value ΔQ of the torque Q is not more than the prescribed reference value ΔQlim and the absolute value of the change value ΔNe of the engine speed Ne is not more than the prescribed reference value ΔNelim.

When it is judged that a stationary operation is not currently performed, in step S313, the flow returns. However, when it is judged that the stationary operation is currently performed, the exhaust gas for decision in which the air/fuel ratio is approx. 23 is generated in step S314. And it reads the information of the exhaust gas on values detected by the air/fuel ratio sensor 6 and the NOx sensor 8 in next step S315.

In step S316, it is checked whether the air/fuel ratio Af detected by the air/fuel ratio sensor 6 is in a prescribed air/fuel range, that is, the ratio Af is a value approx. 23 of the exhaust gas for decision. When Af is not in the range, the flow returns to step S314 to wait until the Af falls into a prescribed range. When Af falls into the prescribed range, the flow goes to step S317.

In step S317, it is checked whether the NOx concentration Cnox detected by the NOx sensor 8 is higher than the prescribed reference value Cnoxlim. The prescribed reference value Cnoxlim is the data (numerical value or map data) obtained from an experiment, which is previously input to the controller 4.

In step S317, it is judged that the direct reduction type NOx catalyst 3 is deteriorated when the detected NOx concentration Cnox is higher than the reference value Cnoxlim to set the deterioration judgment flag F2 to 1 and the flow returns. However, when lower than the reference value Cnoxlim, it is judged that the catalyst 3 is not deteriorated so set the deterioration judgment flag F2 to 0 and the flow returns.

Then, in the deterioration state checking in step S320 in FIG. 5 returned from the deterioration judgment flow, the deterioration judgment flag F2 is determined. When F2=1, the flow goes to the deteriorated catalyst reactivation control in step S330. When F2=0, the flow returns to the NOx purging system control flow in FIG. 3.

According to the method of deciding on catalyst deterioration and the means 221 for deciding on catalyst deterioration in the exhaust gas purging system 10 having the above configuration, it is possible to comparatively easily and accurately decide a deteriorated state or not by using the characteristic of a direct reduction type NOx catalyst when it is deteriorated.

### INDUSTRIAL APPLICABILITY

The present invention provides the method of deciding on catalyst deterioration and means for deciding on catalyst deterioration in an exhaust gas purging system capable of properly deciding a deteriorated state of a catalyst due to sulfur poisoning in a NOx purging system using a direct reduction type NOx catalyst to purge the NOx contained in the exhaust gas.

Therefore, it is possible to apply the present invention to NOx purging systems respectively using a direct reduction type NOx catalyst to purge the NOx contained in the exhaust gas and to purify efficiently exhaust gas from internal combustion engines and stationary internal combustion engines of vehicles mounting these NOx purging systems.

## Claims

1. A method of deciding on catalyst deterioration in a NOx purging system comprising a direct reduction type NOx catalyst arranged in an exhaust gas passage, in which a catalyst component reduces NOx to nitrogen and is also oxidized, when an oxygen concentration in the exhaust gas of an engine is high, and the catalyst component is reduced, when the oxygen concentration in the exhaust gas is low, which comprises:
generating an exhaust gas for decision when an operating state of an engine is within a deterioration decision zone and is in a steady operation state, and
deciding that the direct reduction type NOx catalyst is deteriorated due to sulfur poisoning, when the NOx concentration in the exhaust gas resulting from pass of the exhaust gas for decision through the direct reduction type NOx catalyst is not less than a prescribed reference value, wherein
the decision that that the operating state of the engine is within a deterioration decision zone, is made when the quantity of the exhaust gas is not more than a prescribed reference quantity of exhaust gas and a catalyst temperature ranges between a prescribed lower limit temperature for decision and a prescribed upper limit temperature for decision, and
the exhaust gas for decision is generated in a manner so that an air/fuel ratio of the exhaust gas is a value between the air/fuel ratio of the exhaust gas during the normal engine operation and the air/fuel ratio of the exhaust gas for regenerating the direct reduction type NOx catalyst.

2. Method of judging catalyst deterioration in a NOx purging system as claimed in claim 1, wherein the prescribed reference lower limit temperature is 250°C and the prescribed reference upper limit temperature is 350°C, and the exhaust gas for decision has an air/fuel ratio of 22 to 25.

3. A means for deciding on catalyst deterioration in a NOx purging system comprising a direct reduction type NOx catalyst arranged in an exhaust gas passage in which a catalyst component reduces NOx to nitrogen and is also oxidized when an oxygen concentration in the exhaust gas of an engine is high and the catalyst component is reduced when the oxygen concentration in the exhaust gas is low, which comprises;
a zone judgment means for judging whether an exhaust gas state is in a zone, in which a decision for the catalyst deterioration can be carried out,
a steady operation judgment means for judging whether an engine operating state is in a steady operation state,
a decision exhaust gas generation means for generating an exhaust gas for decision, and
a NOx concentration judgment means for deciding that the direct reduction type NOx catalyst is deteriorated when the NOx concentration in the exhaust gas resulting from pass of the exhaust gas for decision through the direct reduction type NOx catalyst is higher than a prescribed reference value, wherein
the zone judgment means decides that the operating state of the engine is within a deterioration decision zone, when the quantity of the exhaust gas is not more than a prescribed reference quantity of the exhaust gas and a catalyst temperature ranges between a prescribed lower limit temperature for decision and a prescribed upper limit temperature for decision, and
the decision exhaust gas generation means generates the exhaust gas for decision in a manner, so that an air/fuel ratio of the exhaust gas is a value between the air/fuel ratio of the exhaust gas during the normal engine operation and the air/fuel ratio of the exhaust gas for regenerating the direct reduction type NOx catalyst.

4. Catalyst-deterioration judging means in or for an NOx purging system as claimed in claim 3, wherein the prescribed reference lower limit temperature is 250°C and the prescribed reference upper limit temperature is 350°C, and the exhaust gas for decision has an air/fuel ratio of 22 to 25.

## Patentansprüche

1. Verfahren zum Entscheiden über die Verschlechterung eines Katalysators in einem NOx-Reinigungssystem, welches einen direkt reduzierenden, in einer Abgasleitung angeordneten NOx-Katalysator aufweist, wobei eine Katalysatorkomponente NOx zu Stickstoff reduziert und auch oxidiert wird, wenn die Sauerstoffkonzentration in dem Abgas eines Motors hoch ist, und die Katalysatorkomponente reduziert wird, wenn die Sauerstoffkonzentration in dem Abgas gering ist, wobei das Verfahren folgendes umfaßt:
Erzeugen eines Abgases, um zu entscheiden, wann sich ein Betriebszustand eines Motors innerhalb eines Bereichs zur Entscheidung über die Verschlechterung befindet und in einem stationären Betriebszustand ist, und
Entscheiden, daß sich der direkt reduzierende NOx-Katalysator aufgrund einer Schwefelvergiftung verschlechtert, wenn die NOx-Konzentration in dem Abgas, die daraus resultiert, daß das Abgas für die Entscheidung durch den direkt reduzierenden NOx-Katalysator hindurchströmt, nicht kleiner ist als ein vorgeschriebener Referenzwert, wobei
die Entscheidung, daß bzw. ob der Betriebszustand des Motors sich innerhalb eines Bereichs zur Entscheidung über eine Verschlechterung befindet, getroffen wird, wenn die Menge des Abgases nicht größer ist als eine vorgeschriebene Referenzmenge an Abgas und die Katalysatortemperatur im Bereich zwischen einer vorgeschriebenen unteren Grenztemperatur für die Entscheidung und einer vorgeschriebenen oberen Grenztemperatur für die Entscheidung liegt, und
das Abgas für die Entscheidung in einer solchen Weise erzeugt wird, daß das Luft-/Kraftstoff-Verhältnis des Abgases ein Wert ist, der zwischen dem Luft-/Kraftstoff-Verhältnis des Abgases während des normalen Motorbetriebs und dem Luft-/Kraftstoff-Verhältnis des Abgases zum Regenerieren des direkt reduzierenden NOx-Katalysators liegt.

2. Verfahren zur Beurteilung der Katalysatorverschlechterung in einem NOx-Reinigungssystem nach Anspruch 1, wobei die vorgeschriebene untere Referenz-Grenztemperatur 250°C beträgt und die vorgeschriebene obere Referenz-Grenztemperatur 350°C beträgt und das Abgas für die Entscheidung ein Luft-/Kraftstoff-Verhältnis von 22 bis 25 hat.

3. Vorrichtung zur Entscheidung über die Katalysatorverschlechterung in einem NOx-Reinigungssystem, welches einen direkt reduzierenden, in einer Abgasleitung angeordneten NOx-Katalysator beinhaltet, wobei eine Katalysatorkomponente NOx zu Stickstoff reduziert und auch oxidiert wird, wenn die Sauerstoffkonzentration in dem Abgas eines Motors hoch ist, und die Katalysatorkomponente reduziert wird, wenn die Sauerstoffkonzentration in dem Abgas gering ist, wobei die Vorrichtung folgendes aufweist:
eine Vorrichtung zur Beurteilung des Bereichs, um zu beurteilen, ob sich der Zustand eines Abgases in einer Zone bzw. einem Bereich befindet, in der bzw. dem eine Entscheidung über die Katalysatorverschlechterung getroffen werden kann,
eine Vorrichtung zur Beurteilung des stationären Betriebs, um zu beurteilen, ob sich der Betriebszustand eines Motors in einem stationären Betriebszustand befindet,
eine Vorrichtung zur Erzeugung von Abgas für die Entscheidung, um ein Abgas für die Entscheidung zu erzeugen, und
eine Vorrichtung zur Beurteilung der NOx-Konzentration, um zu entscheiden, daß bzw. ob sich der direkt reduzierende NOx-Katalysator verschlechtert hat, wenn die NOx-Konzentration in dem Abgas, die daraus resultiert, daß das Abgas für die Entscheidung durch den direkt reduzierenden NOx-Katalysator hindurchströmt, größer ist als ein vorgeschriebener Referenzwert, wobei
die Vorrichtung zur Beurteilung des Bereichs entscheidet, daß sich der Betriebszustand des Motors innerhalb eines Bereichs zur Entscheidung über die Verschlechterung befindet, wenn die Menge des Abgases nicht größer ist als eine vorgeschriebene Referenzmenge an Abgas und die Katalysatortemperatur im Bereich zwischen einer vorgeschriebenen unteren Grenztemperatur für die Entscheidung und einer vorgeschriebenen oberen Grenztemperatur für die Entscheidung liegt, und
die Vorrichtung zur Erzeugung von Abgas für die Entscheidung das Abgas für die Entscheidung in einer solchen Weise erzeugt, daß das Luft-/Kraftstoff-Verhältnis des Abgases ein Wert ist, der zwischen dem Luft-/Kraftstoff-Verhältnis des Abgases während des normalen Motorbetriebs und dem Luft-/Kraftstoff-Verhältnis des Abgases zum Regenerieren des direkt reduzierenden NOx-Katalysators liegt.

4. Vorrichtung zur Beurteilung der Katalysatorverschlechterung in einem oder für ein NOx-Reinigungssystem nach Anspruch 3, wobei die vorgeschriebene untere Referenz-Grenztemperatur 250°C beträgt und die vorgeschriebene obere Referenz-Grenztemperatur 350°C beträgt und das Abgas für die Entscheidung ein Luft-/Kraftstoff-Verhältnis von 22 bis 25 hat.

## Revendications

1. Une méthode de décision quant à la détérioration d'un catalyseur dans un système de purge de NOx comportant un catalyseur NOx de type à réduction directe arrangé dans un conduit de gaz d'échappement, dans laquelle un composant de catalyseur réduit les NOx en azote et est également oxydé lorsqu'une concentration en oxygène dans le gaz d'échappement d'un moteur est élevée, et le composant de catalyseur est réduit lorsque la concentration en oxygène dans le gaz d'échappement est faible, laquelle comporte :
la génération d'un gaz d'échappement destiné à décider lorsqu'un état de fonctionnement d'un moteur se trouve dans les limites d'une zone de décision de détérioration et lorsqu'il se trouve dans un état de fonctionnement régulier, et
la prise de décision que le catalyseur NOx de type à réduction directe est détérioré dû à un empoisonnement au soufre, lorsque la concentration en NOx dans le gaz d'échappement résultant du passage du gaz d'échappement destiné à la décision dans le catalyseur NOx de type à réduction directe n'est pas inférieure à une valeur de référence prescrite, dans laquelle
la décision que l'état de fonctionnement du moteur se trouve dans les limites d'une zone de décision de détérioration est prise lorsque la quantité de gaz d'échappement n'est pas supérieure à une quantité de référence prescrite de gaz d'échappement et qu'une température de catalyseur se trouve dans la gamme comprise entre une température limite inférieure prescrite pour la décision et une température limite supérieure prescrite pour la décision, et
le gaz d'échappement destiné à la décision est généré d'une manière telle qu'un rapport air/carburant du gaz d'échappement soit une valeur comprise entre le rapport air/carburant du gaz d'échappement durant le fonctionnement normal du moteur et le rapport air/carburant du gaz d'échappement destiné à la régénération du catalyseur NOx de type à réduction directe.

2. Méthode de jugement de la détérioration d'un catalyseur dans un système de purge de NOx telle que revendiquée dans la revendication 1, dans laquelle la température limite inférieure de référence prescrite est de 250 °C et la température limite supérieure de référence prescrite est de 350 °C, et le gaz d'échappement destiné à la décision a un rapport air/carburant de 22 à 25.

3. Un moyen servant à décider de la détérioration d'un catalyseur dans un système de purge de NOx comportant un catalyseur NOx de type à réduction directe arrangé dans un conduit de gaz d'échappement, dans lequel un composant de catalyseur réduit les NOx en azote et est également oxydé lorsqu'une concentration en oxygène dans le gaz d'échappement d'un moteur est élevée, et le composant de catalyseur est réduit lorsque la concentration en oxygène dans le gaz d'échappement est faible, lequel comporte :
un moyen de jugement de zone destiné à juger si un état de gaz d'échappement se trouve dans une zone dans laquelle une décision quant à la détérioration du catalyseur peut être exécutée,
un moyen de jugement de fonctionnement régulier destiné à juger si un état de fonctionnement de moteur est dans un état de fonctionnement régulier,
un moyen de génération de gaz d'échappement de décision destiné à générer un gaz d'échappement destiné à la décision, et
un moyen de jugement de concentration en NOx destiné à décider que le catalyseur NOx de type à réduction directe est détérioré lorsque la concentration en NOx dans le gaz d'échappement résultant du passage du gaz d'échappement destiné à la décision dans le catalyseur NOx de type à réduction directe est supérieure à une valeur de référence prescrite, dans lequel
le moyen de jugement de zone décide que l'état de fonctionnement du moteur se trouve dans les limites d'une zone de décision de détérioration lorsque la quantité de gaz d'échappement n'est pas supérieure à une quantité de référence prescrite de gaz d'échappement et qu'une température de catalyseur se trouve dans la gamme comprise entre une température limite inférieure prescrite pour la décision et une température limite supérieure prescrite pour la décision, et
le moyen de génération de gaz d'échappement de décision génère le gaz d'échappement destiné à la décision d'une manière telle qu'un rapport air/carburant du gaz d'échappement soit une valeur comprise entre le rapport air/carburant du gaz d'échappement durant le fonctionnement normal du moteur et le rapport air/carburant du gaz d'échappement destiné à la régénération du catalyseur NOx de type à réduction directe.

4. Moyen de jugement de la détérioration d'un catalyseur dans ou pour un système de purge de NOx tel que revendiqué dans la revendication 3, dans lequel la température limite inférieure de référence prescrite est de 250 °C et la température limite supérieure de référence prescrite est de 350 °C, et le gaz d'échappement destiné à la décision a un rapport air/carburant de 22 à 25.
